# EUROPÄISCHE PATENTANMELDUNG

(11) **EP 1 655 197 A2**
(43) Veröffentlichungstag der Anmeldung: **10.05.2006**
(21) Anmeldenummer: 05024070.4
(22) Anmeldetag: 04.11.2005
(51) Int. Cl.: B62B 3/14

(54) **Einkaufswagen oder Einkaufskorb mit Leselupe**

(30) Priorität: 06.11.2004 DE 202004017170 U; 12.07.2005 DE 202005010956 U
(71) Anmelder: Münger, Heinz, 9501 Wil (CH)
(72) Erfinder: Münger, Heinz, 9501 Wil (CH)
(74) Vertreter: Gallo, Wolfgang

(57) **Zusammenfassung**

Einkaufswagen mit einem Wagengestell und einem Wagenkorb oder Einkaufskorb, mit einer über ein gelenkiges Verbindungsglied (2) mit dem Wagengestell oder dem Korb verbundenen Lupe, die aus einem mit dem Verbindungsglied (2) verbundenen metallenen Haltering (1) oder Halteglied (1'), einem Schutzring (3) aus nichtmetallischem, stoß- und bruchfestem Material, und einem darin eingesetzten Lupenglas (4) besteht, wobei der Schutzring sowohl radial als auch nach beiden Seiten axial deutlich über das Lupenglas (4) übersteht.

## Beschreibung

Die Erfindung betrifft einen Einkaufswagen oder Einkaufskorb mit Leselupe.

Auf unzähligen in Supermärkten verkauften Produkten sind, teils aus Platznot (vor allem bei Kleinverpackungen), teils aus anderen Gründen, wichtige Texte wie Angaben von Inhaltstoffen oder dgl. so klein gedruckt, daß sie für viele Kunden, insbesondere ältere und sehschwächere Kunden, sehr schwer lesbar sind. Hinzukommt, daß es in Supermärkten häufig in Gängen und Winkeln schlecht ausgeleuchtete Bereiche gibt, wo derartige Texte, zumal wenn sie auf farbigem oder dunklem Untergrund oder in negativ Schrift gedruckt sind, noch schwerer lesbar sind.

Heutzutage, wo viele Kunden gesundheitsbewusst einkaufen wollen, möchten sich die Leute aber über Produktinhaltsstoffe, Herstellungsdaten, Haltbarkeitsdatum und dgl. informieren können.

Aufgabe der Erfindung ist es daher, dem aufgezeigten Problem der schweren Lesbarkeit solcher Produktinformationen abzuhelfen.

Zur Lösung dieser Aufgabe beinhaltet die Erfindung einen mit einer Leselupe ausgestatteten Einkaufswagen. Die fest mit dem Einkaufswagen, insbesondere irgendwo am Wagenkorb, fixierte und somit unverlierbare Lesehilfe ermöglicht eine wirksame Abhilfe des aufgezeigten Übels. Durch die besondere Ausbildung der fest mit dem Einkaufswagen verbundenen Lupe wird trotz der zu erwartenden Beanspruchungen und rauen Behandlung eine lange Lebensdauer unter Erhaltung der Funktionsfähigkeit und Gebrauchstauglichkeit erreicht.

Dementsprechend beinhaltet die Erfindung einen mit einer Leselupe ausgestatteten Einkaufswagen nach Anspruch 1. Vorteilhafte Ausgestaltungen sind Gegenstand der Unteransprüche.

Ein Ausführungsbeispiel der Erfindung wird nachstehend unter Bezugnahme auf die anliegenden Zeichnungen mehr im einzelnen beschrieben. In den Zeichnungen zeigt:
- Fig. 1: einen Schnitt durch die mit einem Einkaufswagen verbundene Einkaufswagenlupe,
- Fig. 2: eine Ansicht der Einkaufswagenlupe bei weggelassenem Vorderteil des Schutzrings,
- Fig. 3: eine auseinandergezogene Schnittdarstellung der Einkaufswagenlupe,
- Fig. 4: eine Ansicht eines Ausschnitts eines Einkaufswagens mit einer daran angeordneten, leicht abgewandelten Ausführungsform der Einkaufswagenlupe,
- Fig. 5: die Anordnung nach Figur 4 in Seitenansicht von links,
- Fig. 6: eine auseinandergezogene Schnittdarstellung ähnlich Fig. 3 mit modifiziertem Haltering,
- Fig. 7: einen Schnitt durch eine weitere Ausführungsform einer Einkaufswagenlupe, und
- Fig. 8: eine teilweise geschnittene Ansicht der EinKaufswagenlupe nach Fig. 8.

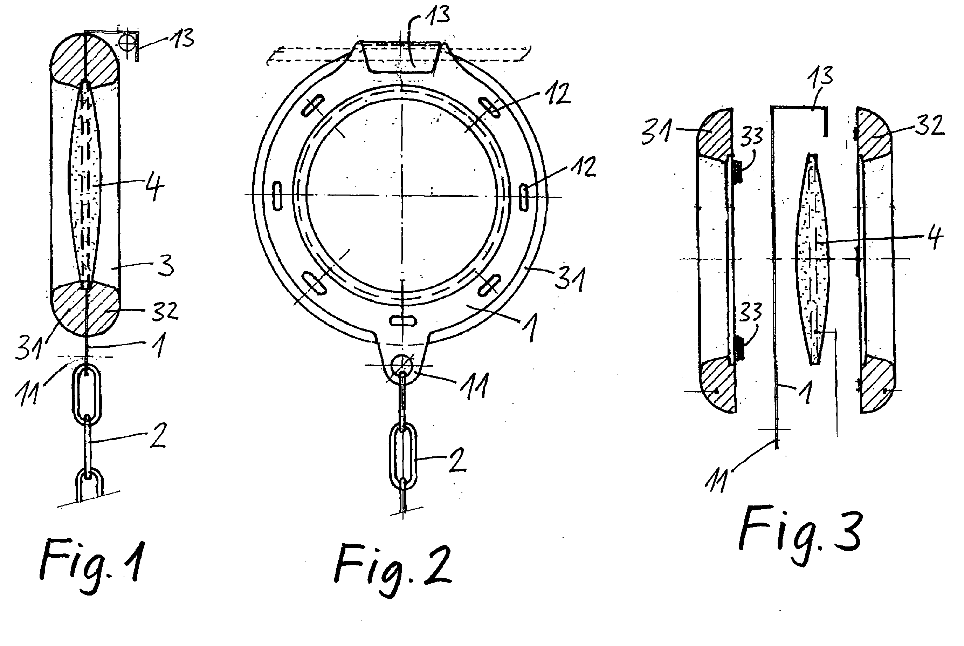

Die Fig. 1 bis 3 zeigen nur die Einkaufswagenlupe an einer abgebrochen dargestellten Kette, nicht aber den Einkaufswagen selbst.

Die Einkaufswagenlupe nach den Fig. 1 bis 3 besteht aus einem metallenen Haltering 1, einer Anhängekette 2, einem Schutzring 3 aus halbhartem Gummi, und einem Lupenglas 4.

Der Haltering 1 und die Anhängekette 2 sind aus rostfreiem Metall, vorzugsweise rostfreiem Stahl gefertigt. Die Anhängekette 2 ist, wie Fig. 2 zeigt, mit ihrem einen Ende mit einer Öse 11 des Halterings 1 verbunden und mit ihrem anderen Ende an einer geeigneten Stelle am Einkaufswagenkorb befestigt.

Die Fig. 1 und 3 zeigen den Aufbau der Einkaufswagenlupe jeweils im Axialschnitt, wobei Fig. 1 den zusammengesetzten Zustand und Fig. 3 die Einzelteile in auseinandergezogener Darstellung zeigt. Das Lupenglas 4 sitzt in der Ringöffnung des Halterings 1. Der Schutzring 3 aus halbhartem Gummi besteht aus zwei Hälften, die in der axial Mittelebene des linsenförmigen Lupenglases geteilt sind. Die beiden Hälften 31 und 32 des Schutzrings 3 nehmen den Haltering 1 axial zwischen sich auf. Dabei ist vorzugsweise die eine Hälfte 31 des Schutzrings mit noppen- oder zapfenförmigen Vorsprüngen 33 an ihrer der anderen Hälfte 32 zugewandten Seite versehen, und die andere Hälfte 32 hat entsprechende komplementäre Vertiefungen (nicht dargestellt), und der Haltering 1 ist an den entsprechenden Stellen mit ausgestanzten Durchbrüchen 12 versehen. Das Zusammensetzen der Teile erfolgt also dadurch, daß die beiden Hälften 31, 32 des Schutzrings 3 und Dazwischenlegen des Halterings 1 und des Lupenglases 4 zusammengesteckt werden, wobei die noppen- oder zapfenartigen Vorsprünge 33 die Durchbrüche 12 des Halterings durchdringen, und die beiden Hälften 31, 32 des Schutzrings 3 und der Haltering 1 sind durch Verkleben, Vulkanisieren oder dgl. unlösbar miteinander verbunden. Die beiden Hälften 31, 32 des Schutzrings übergreifen jeweils die beiden Stirnseiten des linsenförmigen Lupenglases 4 etwas radial und fixieren so das Lupenglas im Haltering 1 und im Schutzring 3.

Das Lupenglas 4 kann aus Glas oder Kunststoff bestehen und zusätzlich durch Verklebung im Schutzring 3 gesichert sein.

Der Schutzring 3 hat, wie die Zeichnungen zeigen, eine Wulstform und eine solche Dicke, daß er sowohl am Umfang als auch axial an beiden Seiten deutlich über das Lupenglas 4 übersteht. Damit schützt er das Lupenglas gegen Beschädigung auch dann, wenn die Lupe innen oder außen am Einkaufswagenkorb baumelt und gegen den Einkaufswagenkorb oder andere Gegenstände schlägt. Da der Schutzring 3 aus halbhartem Gummi besteht, dämpft er Schläge ab und schützt so das Lupenglas effizient gegen Beschädigungen jeder Art.

Bei der Ausführungsform nach den Fig. 1 bis 3 hat der Haltering 1 an seiner der Öse 11 diametral gegenüberliegenden Seite einen umgebogenen hakenförmigen Ansatz 13, der es ermöglicht, die Lupe an der oberen Randstange des Einkaufswagenkorbs bei Nichtgebrauch einzuhängen.

Der metallene Haltering 1 steht also mit seiner Öse 11 einerseits und mit dem Haken 13 andererseits über den Schutzring 3 über.

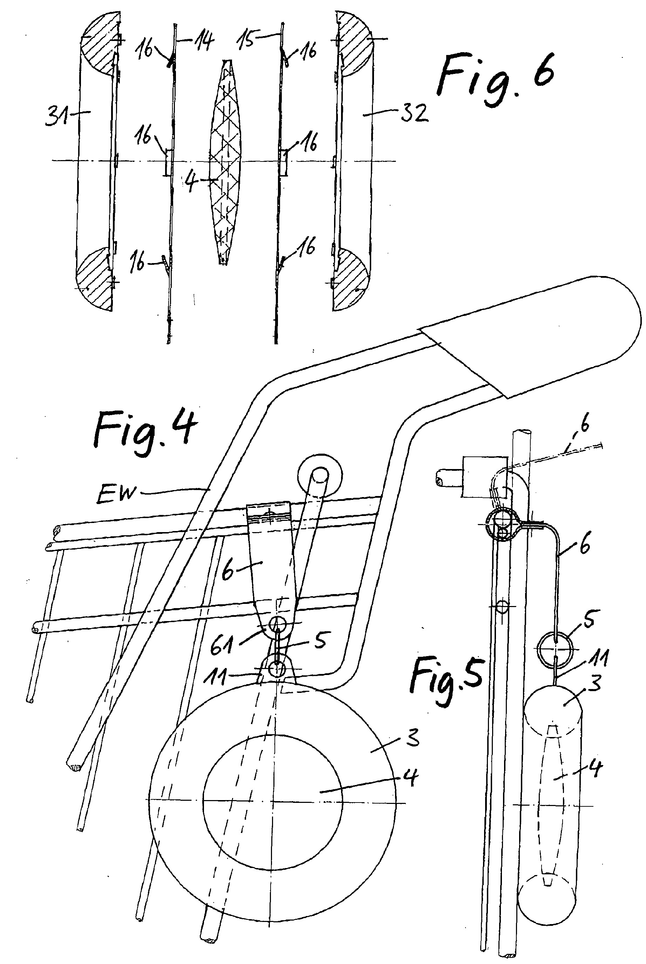

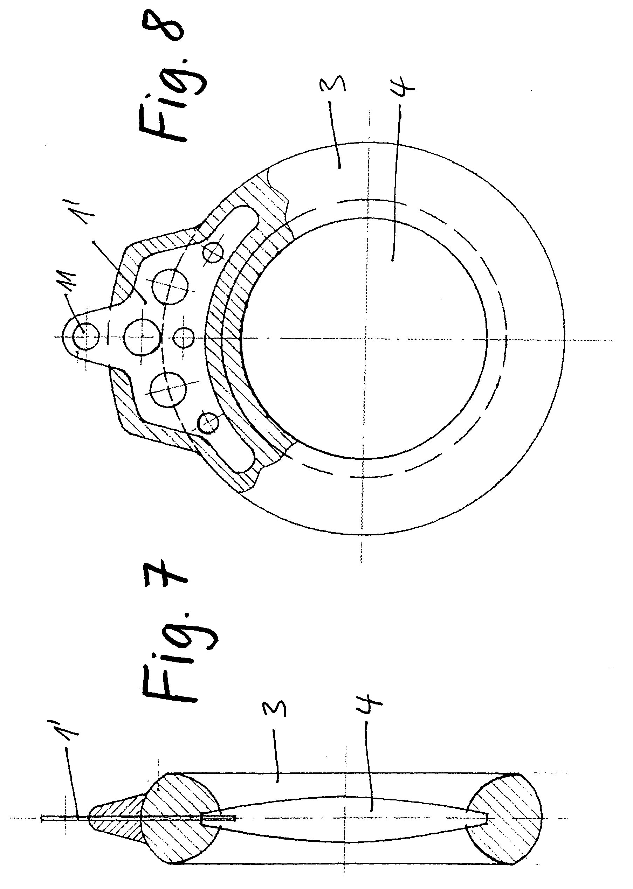

Die Fig. 4 und 5 zeigen eine leicht abgewandelte Ausführungsform der Einkaufswagenlupe an einem Einkaufswagen EW. Die Lupe selbst ist dabei nur schematisch mit Schutzring 3 und Lupenglas 4 sowie der sichtbaren Öse 11 des Halterings dargestellt. Bei dieser Ausführungsform ist die Lupe nicht über eine mehrgliedrige Kette 2, wie bei dem Ausführungsbeispiel nach den Fig. 1 bis 3, mit dem Einkaufswagen verbunden, und der Haltering hat auch gegenüber der Öse 11 keinen Hakenansatz 13 zum Einhängen am Korbrand des Einkaufswagens. Stattdessen ist die Lupe mit der Öse 11 über einen Ring 5 mit einer Öse 61 eines vorzugsweise schwenkbar (siehe Fig. 5) am Korbrand oder an sonstiger geeigneter Stelle des Einkaufswagens EW montierten Haltewinkel 6 oder einem ähnlichen Haltebauteil angebracht. Der Ring 5 kann natürlich auch durch eine Kette mit nur zwei oder drei Gliedern ersetzt sein. Diese Anordnung bezweckt, daß die Einkaufswagenlupe sehr kurz am Einkaufswagen befestigt ist, so dass sie nicht frei herumbaumeln und herumschlagen oder sich womöglich an einem anderen Einkaufswagen oder an Regalen oder dergleichen verhängen kann.

Fig. 6 zeigt eine Einkaufswagenlupe in auseinandergezogener Darstellung ähnlich Figur 3, wobei jedoch der Haltering 1 modifiziert ist und aus zwei axial aneinandergesetzten Teilringen 14 und 15 besteht. Diese haben jeweils über den Umfang der Ringöffnung verteilt radial einwärts vorspringende Laschen 16, die etwas abgebogen sind, und die, wenn die beiden Teilringe 14 und 15 aneinandergesetzt sind, das Lupenglas 4 an dessen Umfang formschlüssig haltern. Diese Modifikation des Halterings 1 kann sowohl bei der Ausführungsform nach den Figuren 1 bis 3 als auch bei der Ausführungsform nach den Figuren 4 und 5 Anwendung finden.

Bei den dargestellten Ausführungsbeispielen hat die Lupe eine kreisrunde Form. Es versteht sich, daß die Lupe auch jede beliebige andere geometrisch Form haben kann.

Die erfindungsgemäße Einkaufswagenlupe hat, wie dargestellt, eine sehr einfache und damit herstellungsgünstige und kostenkünstige sowie für den Gebrauch zweckmäßige Form, die zugleich größstmögliche Sicherheit gegen Beschädigung auch durch Vandalismus und durch rauen Gebrauch im Einkaufswagen-Alltag bietet. Sie ist stoßfest, unzerbrechlich (insbesondere wenn das Lupenglas aus Kunststoff besteht), gut und sehr einfach in der Handhabung, und sie bietet keine Defektmöglichkeit, weil keine bewegliche Mechanik vorhanden ist.

Der Schutzring 3 kann anstatt aus halbhartem Gummi auch aus geeignetem Kunststoffmaterial oder, global gesagt, aus einem geeigneten stoß- und bruchfestem nichtmetallischen Material gefertigt sein.

Weiter kann der Schutzring 3 anstatt der in den Zeichnungen dargestellten Ausführungsform aus zwei miteinander verbundenen Hälften auch einstückig durch unmittelbares An- bzw. Umspritzen um das Lupenglas und den Haltering 1 aus geeignetem Gummi- oder Kunststoffmaterial ausgebildet sein.

Die Fig. 7 und 8 zeigen eine weitere, zweckmäßige und vereinfachte Ausführungsform einer Lupe, wobei der Schutzring 3 einstückig ausgebildet ist. Er besteht vorzugsweise aus weichem elastischem Material, z.B. Silikonmaterial. Statt eines Halterings wie bei den vorbeschriebenen Ausführungsformen ist nur noch ein metallenes Halteelement 1' vorgesehen das in den Schutzring 3 eingespritzt ist und mit seinem inneren Bereich in eine äußere Nut des Lupenglases 4 eingreift.

## Patentansprüche

1. Einkaufswagen mit einem Wagengestell und einem Wagenkorb oder Einkaufskorb, mit einer über ein gelenkiges Verbindungsglied (2) mit dem Wagengestell oder dem Korb verbundenen Lupe, die aus einem mit dem Verbindungsglied (2) verbundenen metallenen Haltering (1) oder Halteglied (1'), einem Schutzring (3) aus nichtmetallischem, stoß- und bruchfestem Material, und einem darin eingesetzten Lupenglas (4) besteht, wobei der Schutzring sowohl radial als auch nach beiden Seiten axial deutlich über das Lupenglas (4) übersteht.

2. Einkaufswagen oder Einkaufskorb nach Anspruch 1, wobei der Schutzring (3) aus halbhartem Gummi oder Kunststoff wie z.B. Silikon besteht.

3. Einkaufswagen oder Einkaufskorb nach Anspruch 1 oder 2, wobei der Schutzring (3) aus zwei Hälften (31, 32) besteht, die axial zusammengesetzt sind und zwischen sich den metallenen Haltering (1) aufnehmen.

4. Einkaufswagen oder Einkaufskorb nach Anspruch 3, wobei die beiden Hälften (31, 32) des Schutzrings (3) miteinander zusammenwirkende komplementäre Vorsprünge (33) und Vertiefungen haben.

5. Einkaufswagen oder Einkaufskorb nach Anspruch 4, wobei der aus Metallblech gestanzte Haltering (1) Durchbrüche (12) aufweist, durch welche die Vorsprünge (33) an den Hälften (31, 32) des Schutzrings (3) hindurchverlaufen.

6. Einkaufswagen oder Einkaufskorb nach einem der Ansprüche 1 bis 5, wobei der Haltering (1) aus zwei axial aneinandergelegten Teilringen (14, 15) besteht, die jeweils am inneren Ringumfang verteilt radial vorstehende und axial auswärts abgebogene Stützlaschen (16) zum seitlichen Abstützen des Lupenglases (4) an dessen Umfangsbereich aufweisen.

7. Einkaufswagen oder Einkaufskorb nach Anspruch 1 oder 2, wobei das Halteglied (1') das Lupenglas nur über ein Segment von dessen Umfang umgreift oder in eine Nut desselben eingreift.

8. Einkaufswagen oder Einkaufskorb, nach Anspruch 1 oder 7, wobei der Schutzring (3) einstückig um den Umfangsbereich des Lupenglases(4) und um den Haltering (1) oder das Halteglied (1') angespritzt ausgebildet ist.

9. Einkaufswagen oder Einkaufskorb nach einem der Ansprüche 1 bis 8, wobei der Haltering (1) oder das Halteglied (1') mit einer aus dem Schutzring (3) herausragenden Öse (11) mit dem Verbindungsglied (2) verbunden ist.

10. Einkaufswagen oder Einkaufskorb nach einem der Ansprüche 1 bis 9, wobei das Verbindungsglied durch einen Ring (5) oder eine Kurzkette mit nur wenigen Gliedern ist, der bzw. die den Haltering (1) mit einem am Einkaufswagen (EW) oder Einkaufskorb angebrachten Haltewinkel (6), Haltearm oder dergl. verbindet.
